# FASCICULE DE BREVET EUROPEEN

(11) **EP 2 380 352 B1**
(45) Date de publication et mention de la délivrance du brevet: **23.12.2020**
(21) Numéro de dépôt: 09806104.7
(22) Date de dépôt: 23.12.2009
(51) Int. Cl.: H04N 19/12, H04N 19/14, H04N 19/176, H04N 19/186, H04N 19/48, H04N 19/80, H04N 19/85, H04N 1/41

(54) **PROCÉDÉ D'ENCODAGE PAR SEGMENTATION D'UNE IMAGE**
VERFAHREN ZUR SEGMENTIERUNG UND CODIERUNG EINES BILDES
METHOD FOR SEGMENTATION-BASED IMAGE CODING

(30) Priorité: 23.12.2008 FR 0859018
(43) Date de publication de la demande: 26.10.2011
(73) Titulaire: SAGEMCOM BROADBAND SAS, 92500 Rueil-Malmaison (FR)
(72) Inventeur: MORARD, Jean-Pierre, F-92500 Rueil-Malmaison (FR); PIETQUIN, Olivier, F-92500 Rueil-Malmaison (FR); VIALLE, Stéphane, F-92500 Rueil-Malmaison (FR)
(74) Mandataire: Camus, Olivier Jean-Claude
(86) Numéro de dépôt international: PCT/FR2009/052681
(87) Numéro de publication internationale: WO 2010/072983

(56) Documents cités:
- EP-A2- 0 933 947
- EP-A2- 1 152 594
- WO-A1-02/075661
- US-A1- 2008 175 475
- TONY LIN ET AL: "Hybrid image coding for real-time computer screen video transmission" VISUAL COMMUNICATIONS AND IMAGE PROCESSING; 20-1-2004 - 20-1-2004; SAN JOSE,, 20 janvier 2004 (2004-01-20), XP030081359
- LIANG Y J ET AL: "Low-complexity intra/inter mode-decision for H.264/AVC video coder" INTELLIGENT MULTIMEDIA, VIDEO AND SPEECH PROCESSING, 2004. PROCEEDINGS OF 2004 INTERNATIONAL SYMPOSIUM ON HONG KONG, CHINA OCT. 20-22, 2004, PISCATAWAY, NJ, USA,IEEE, 20 octobre 2004 (2004-10-20), pages 53-56, XP010801382

## Description

### DOMAINE TECHNIQUE DE L'INVENTION

La présente invention a pour objet un procédé d'encodage par segmentation d'une image vidéo. L'invention a notamment pour but d'améliorer la qualité de rendu d'une image ayant préalablement fait l'objet d'une opération de compression afin de limiter le débit d'informations nécessaire pour le stockage et/ou la transmission des informations relatives à l'image considérée une fois encodée. L'opération d'encodage selon l'invention est réalisée notamment en assurant la possibilité d'une restitution d'un maximum de détails pour des zones de l'image correspondant à des zones dites d'IHM (Interface Homme-Machine) par rapport à d'autres zones de l'image considérée correspondant à des zones de photos, de vidéo....

Le domaine de l'invention est, d'une façon générale, celui de la compression des images vidéo. A titre d'exemple, sans que cela soit limitatif de la portée de l'objet de l'invention, le domaine de l'invention sera plus particulièrement détaillé dans un contexte faisant essentiellement intervenir la norme de compression dite H264, sans que cet aspect soit limitatif quant à la portée de l'invention. En effet, d'autres normes de compression, par exemple du type VC1 ou DivX, même si elles sont moins avantageuses dans certains contextes, peuvent être utilisées dans la mise en œuvre du procédé selon l'invention.

Les différentes normes de codage vidéo s'appuient toutes sur des mêmes grands principes. D'une part elles s'appuient sur la redondance d'informations temporelles, ou spatiale, afin de réduire la quantité d'informations, sans nécessairement introduire de pertes. D'autre part, certaines informations, ou détails, sont supprimés, ce qui introduit des pertes dans l'image restaurée, lesdites pertes étant généralement ciblées par rapport aux propriétés de la psycho-vision. En effet, certains détails des images ne sont pas ou peu perçus par l'œil et peuvent donc être omis. On obtient alors un flux vidéo compressé. Les principales étapes de la compression vidéo sont ainsi les suivantes :
- Codage de l'image à encoder en luminance-chrominance ;
- Division de l'image en macro-blocs, ou blocs élémentaires, uqi sont des régions rectangulaires qui ont une taille comprise entre 4*4 et 16*16 pixels ;

- Estimation de mouvements ;
- Compensation de mouvements ;
- Transformée fréquentielle : On applique une DCT (Transformée en cosinus discret) sur chaque bloc élémentaire. Une telle transformée permet d'obtenir une représentation fréquentielle de l'image.
- Quantification ; les données issues de la DCT sont quantifiées en étant codées sur un nombre limité de bits. C'est ici qu'intervient la perte d'informations.
- Codage entropique. Dans un tel codage, plus une valeur donnée apparait souvent, plus elle va être codée sur un petit nombre de bits.

Le contexte dans lequel sera décrit la présente invention sera celui de la mise en place d'applications de type media center, qui consiste en l'utilisation, de façon distante, d'un ordinateur dans un domicile en différents points dudit domicile, afin de disposer de divers services qui peuvent être utilisés au travers de postes clients, par exemple un décodeur de télévision numérique, répartis dans l'habitat. A cet effet, il est nécessaire de transférer différentes informations, et notamment des images vidéo, au travers du réseau constitué par l'ordinateur, les clients et les liaisons les reliant ; la compression des images est ainsi une nécessité pour assurer un bon fonctionnement de l'application de type média center distribuée sur un réseau.

### ARRIERE-PLAN TECHNOLOGIQUE DE L'INVENTION

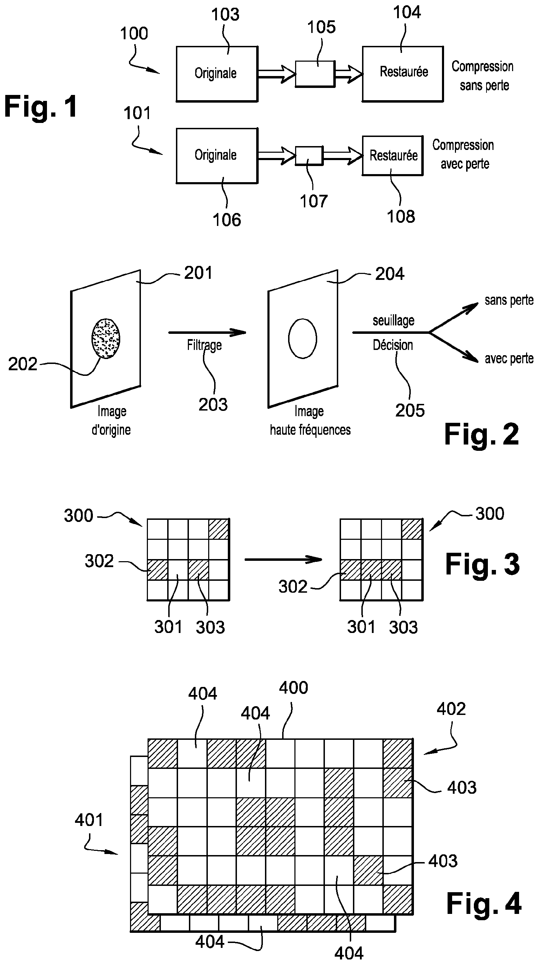

La norme H264 prévoit deux types de compression, illustrés à la figure 1. Un premier type de compression 100, dit mode de compression sans perte, ou compression lossless, permet d'obtenir, à partir d'une image originale 103, une image restaurée 104 après une phase de compression 105 qui n'induit aucune perte dans l'image restaurée 104. Un deuxième type de compression 101, dit mode de compression avec perte, ou compression lossy, permet d'obtenir, à partir d'une image originale 106, une image restaurée 107 après une phase de compression 108 qui induit une perte d'informations dans l'image restaurée 107 par rapport à l'image originale 106, perte d'informations qui se traduit par une diminution de la qualité de l'image, notamment en terme de netteté.

La norme H264 est privilégiée pour la transmission de vidéo à travers le réseau créé. Mais cette norme est, comme expliqué précédemment, susceptible de produire des pertes d'informations lors des opérations de compression intervenant lors de l'encodage des données vidéo notamment. A la base, ces pertes sont sensées ne pas être réellement discernables par l'œil humain ; c'était le cas notamment lorsque les données vidéo à encoder et à transmettre étaient uniquement du type photos ou images d'émission de télévision, par exemple. Cependant, dans certains cas, les défauts introduits par ces pertes d'informations peuvent devenir très visibles. C'est le cas en particulier lorsque l'on a des images telles que les boutons, les menus, ou tout autre élément contenant du texte et beaucoup de détails.

D'une façon plus générale, lorsque l'on compresse une image pour gagner du temps dans une transmission ou de l'espace de stockage, un certain taux de perte est consenti afin d'obtenir un meilleur taux de compression. Or ces pertes, qui ne posent pas de problèmes pour la visualisation de vidéo, sont un inconvénient pour le rendu d'images de type IHM graphique. En effet, le rendu d'IHM doit être plus particulièrement soigné car l'image est très souvent statique ou légèrement animée, et les défauts y sont perceptibles. D'autre part, lorsqu'un utilisateur final passe d'un poste de type PC à une application sur le téléviseur, son appréciation, à contenu identique, est plus critiue.

La demande de brevet WO02/075661 divulgue une technique de compression d'images qui prévoit le codage sans pertes des parties d'image de type texte/ élément graphique et le codage avec pertes des autres parties d'images.

### DESCRIPTION GENERALE DE L'INVENTION

Le procédé selon l'invention propose une solution aux problèmes et inconvénients qui viennent d'être exposés. Dans l'invention, on propose une solution pour améliorer la qualité du rendu de l'image à restituer. A cet effet, dans l'invention, on cherche notamment à distinguer des zones de l'image correspondant à des IHM, dont la qualité de restitution doit être optimisée, et des zones de l'image correspondant à du contenu de type photo, vidéo, images..., pour lesquelles une compression avec perte peut être acceptée. En fonction de la nature des zones distinguées, on applique alors soit un mode de compression sans perte, soit un mode de compression avec perte.

L'invention concerne donc essentiellement un procédé d'encodage d'une image selon l'objet de la revendication indépendante 1.

Par l'expression "directement encadré", on désigne le fait que le bloc élémentaire considéré est adjacent à au moins deux bloc élémentaires de type lossless, les deux blocs élémentaires étant situé soit à gauche et à droite du bloc élémentaire considéré, soit au-dessus et au-dessous du bloc élémentaire considéré.

Le procédé selon l'invention peut comporter, en plus des étapes principales qui définissent l'objet de la revendication 1, une ou plusieurs caractéristiques supplémentaires parmi les suivantes:
- l'étape consistant à déterminer les blocs élémentaires présentant un niveau de détail important comporte les différentes opérations consistant à, pour chaque bloc élémentaire considéré :
   - réaliser un filtrage spatial pour obtenir une représentation fréquentielle ;
   - mesurer un taux de composantes hautes fréquences de la représentation fréquentielle ;
   - si le taux de composantes hautes fréquences est supérieur à un seuil préalablement déterminé, alors identifier le bloc élémentaire considéré comme un bloc élémentaire présentant un niveau de détail important ;
- les différentes opérations de l'étape consistant à déterminer les blocs élémentaires présentant un niveau de détail important sont réalisées pour chacun des plans couleurs de l'image considérée, le bloc élémentaire considéré étant identifié comme un bloc élémentaire présentant un niveau de détail important si, pour un des plans couleur considéré, le taux de composantes hautes fréquences est supérieur à un seuil spécifique préalablement déterminé, chaque plan couleur étant associé à un seuil spécifique ;
- les seuils spécifiques de chaque plan couleur ont la même valeur ;
- le procédé comporte l'étape supplémentaire consistant à appliquer le premier type de compression à tout bloc élémentaire de type bloc élémentaire homogène ;
- l'encodage est du type encodage H264.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- la figure 1, déjà décrite, illustre schématiquement le fonctionnement de deux modes de compression différents ;
- la figure 2 illustre schématiquement le procédé d'encodage selon l'invention ;
- la figure 3 illustre un exemple de mise en œuvre du procédé selon l'invention dans lequel certains blocs élémentaires de l'image à compresser sont compressés selon un mode de compression sans perte après la mise en place de critères particuliers de détermination du mode de compression ;
- la figure 4 illustre un exemple d'image ayant subi un encodage par un exemple de mise en œuvre du procédé selon l'invention.

### DESCRIPTION DES FORMES DE REALISATION PREFEREES DE L'INVENTION

Les éléments apparaissant sur différentes figures auront conservé, sauf précision contraire, les mêmes références.

Dans l'invention, on cherche à segmenter une image à encoder en utilisant des critères particuliers pour déterminer si chaque bloc élémentaire considéré doit être encodé selon une mode de compression lossless ou selon un mode de compression lossy. Les critères définis visent à permettre de distinguer les éléments de l'IHM (boutons, menus, etc...) du reste de l'image. Un critère essentiel réside dans la présence massive ou non de textes dans chaque bloc élémentaire considéré.

Dans l'invention, on propose, dans un premier temps, d'analyser le contenu spectral de chaque bloc élémentaire ; une telle démarche est justifiée par le fait que les éléments de texte, dans une image, se caractérisent par le nombre important de transitions brusques en luminosité et/ou chrominance. Ainsi, dans l'invention, on propose de mesurer le taux des composantes hautes fréquences présentes dans chaque bloc élémentaire, et ceci pour chacune des trois composantes couleur de l'image considérée. Si l'amplitude des composantes fréquentielles situées au-delà d'une certaine fréquence dépasse un seuil donné, le bloc élémentaire considéré est marqué comme une zone lossless.

La figure 2 illustre un tel principe. Sur cette figure, un bloc élémentaire 201 contenant un élément graphique de type bouton 202 est représenté. Le bloc élémentaire subit dans un premier temps un filtrage 203, équivalent à une détection de contour. Il s'agit d'un filtrage passe haut permettant d'obtenir un bloc élémentaire haute fréquence 204. Un tel filtrage amplifie les variations brutales de l'image contenue dans le bloc élémentaire considéré, et atténue les parties lisses, sans détails, de l'image de départ. On retrouve ainsi, dans le bloc élémentaire haute fréquence, une quantité importante de pixels très lumineux aux endroits où il y a du texte, ou beaucoup de détails.

L'image haute fréquence 204 peut être obtenue par un filtre différenciateur tel que le Laplacien
Dans un deuxième temps, une opération de seuillage 205 est réalisée afin de déterminer si la compression du bloc élémentaire doit être du type lossless ou lossy. Ainsi, une fois que l'image haute fréquence a été calculée pour le bloc élémentaire considérée, il est nécessaire de marquer ledit bloc élémentaire comme lossless ou lossy.

On prévoit ainsi, par exemple, les différentes étapes suivantes :
- Une étape de seuillage appliquée sur l'image haute fréquence, où on affecte la valeur "1" à un pixel dont la valeur fréquentielle est supérieure à un seuil préalablement déterminé, avantageusement empiriquement ;
- Une étape de comptage dans laquelle on compte le nombre de pixels, dans le bloc élémentaire considéré, qui se sont vus affecter la valeur 1 dans l'étape précédente ;
- Une étape de décision : si le nombre obtenu lors de la précédente étape est supérieur à une valeur donnée, déterminée par exemple empiriquement, alors le bloc élémentaire considéré est marqué comme lossless. Dans le cas contraire, le bloc élémentaire considéré est marqué comme lossy.

Comme montré à la figure 3, on obtient ainsi, pour une image 300 composée, à titre d'exemple, de 16 blocs élémentaires, une pluralité de blocs élémentaires marqués lossless, représentés en hachurés, les autres blocs élémentaires étant marqués lossy, représentés non hachurés.

Selon un premier mode avantageux de mise en œuvre de l'invention, on prévoit, si un bloc élémentaire 301 qui, à l'issue de l'opération de seuillage 205 est marqué lossy, mais est encadré par un premier bloc élémentaire 302 marqué lossless et par un deuxième bloc élémentaire 303 marqué également lossless, de finalement marquer le bloc élémentaire 301 considéré comme lossless. Il fera donc l'objet d'une compression sans perte. Une telle opération améliore le rendu de l'image qui sera ultérieurement restaurée, en évitant des transitions trop nombreuses entre les blocs élémentaires compressés sans perte et les blocs élémentaires compressés avec perte.

Selon un autre mode avantageux de mise en œuvre du procédé selon l'invention, les blocs élémentaires homogènes qui ont, à l'issue de l'opération de seuillage 205, été marquées lossy, sont transformés en blocs élémentaires marqués lossless. Par bloc élémentaire homogène, également appelé zone plate, on désigne des zones de gradient nul : de telles zones sont caractérisées, pour les trois composantes de couleur considérées, par une dérivée vectorielle nulle selon deux axes perpendiculaires de l'image considérée.

Un tel mode de mise en œuvre permet également d'améliorer le rendu de l'image restaurée, les zones de texte, qui sont donc encodées en lossless étant très souvent directement entourées par des zones plates. Ce mode de mise en œuvre n'est par ailleurs pas pénalisant en terme de bande passante requise, les blocs élémentaires homogènes, même encodés en lossless,

La figure 4 montre une image 402, composée d'une première fenêtre 400 et d'une deuxième fenêtre 401. Des blocs élémentaires 403 ayant subi une compression sans perte, représentés en hachuré, et des blocs élémentaires 404 ayant subi une compression avec perte, représentés non hachurés, sont illustrés sur cette figure. L'image 402 a subi le procédé d'encodage selon l'invention, avec l'application de la mise en œuvre du premier mode avantageux qui vient d'être décrit. Ainsi, on ne trouve aucun bloc élémentaire lossy disposé directement entre deux blocs élémentaires lossless.

## Revendications

1. Procédé d'encodage d'une image, ledit encodage étant de type encodage mixte avec la possibilité d'utiliser un premier type de compression sans perte (100), et un deuxième type de compression avec perte (101), ledit procédé comportant l'opération consistant à diviser l'image en une pluralité de blocs élémentaires (201) ;
ledit procédé comportant les différentes étapes supplémentaires consistant à :
- déterminer les blocs élémentaires (302 ; 303) présentant un niveau de détail important, lesdits blocs élémentaires (302 ; 303) présentant un niveau de détail important correspondant à des zones d'image de type Interface Homme-Machine graphique ;
- attribuer, à chaque bloc élémentaire (302 ; 303) présentant un niveau de détail important, le premier type de compression ;
- attribuer, à chaque bloc élémentaire (301) ne présentant pas un niveau de détail important, le deuxième type de compression ;
- appliquer le premier type de compression (100) à chaque bloc élémentaire auquel ledit premier type de compression a été attribué ;
**caractérisé en ce que**
- le premier type de compression est appliqué à tout bloc élémentaire (301) directement encadré par deux blocs élémentaires auxquels le premier type de compression a été attribué.

2. Procédé d'encodage selon la revendication précédente **caractérisé en ce que** l'étape consistant à déterminer les blocs élémentaires présentant un niveau de détail important comporte les différentes opérations consistant à, pour chaque bloc élémentaire considéré :
- réaliser un filtrage spatial (203) pour obtenir une représentation fréquentielle
- mesurer (205) un taux de composantes hautes fréquences de la représentation fréquentielle ;
- si le taux de composantes hautes fréquences est supérieur à un seuil préalablement déterminé, alors identifier le bloc élémentaire considéré comme un bloc élémentaire présentant un niveau de détail important.

3. Procédé d'encodage selon la revendication précédente **caractérisé en ce que** les différentes opérations de l'étape consistant à déterminer les blocs élémentaires présentant un niveau de détail important sont réalisées pour chacun des plans couleurs de l'image considérée, le bloc élémentaire considéré étant identifié comme un bloc élémentaire présentant un niveau de détail important si, pour un des plans couleur considéré, le taux de composantes hautes fréquences est supérieur à un seuil spécifique préalablement déterminé, chaque plan couleur étant associé à un seuil spécifique.

4. Procédé selon la revendication précédente **caractérisé en ce que** les seuils spécifiques de chaque plan couleur ont la même valeur.

5. Procédé selon l'une au moins des revendications précédentes **caractérisé en ce qu'**il comporte l'étape supplémentaire consistant à :
- appliquer le premier type de compression à tout bloc élémentaire de type bloc élémentaire homogène.

6. Procédé selon l'une au moins des revendications précédentes **caractérisé en ce que** l'encodage est du type encodage H264.

## Patentansprüche

1. Kodierungsverfahren eines Bildes, wobei die genannte Kodierung vom Typ gemischte Kodierung mit der Möglichkeit ist, einen ersten Kompressionstyp ohne Verlust (100) und einen zweiten Kompressionstyp mit Verlust (101) zu verwenden, wobei das genannte Verfahren die Operation umfasst, bestehend im Teilen des Bildes in eine Vielzahl von elementaren Blöcken (201); wobei das genannte Verfahren die unterschiedlichen zusätzlichen Schritte umfasst, bestehend aus:
- Bestimmen der elementaren Blöcke (302; 303), die ein erhebliches Detailniveau aufweisen, wobei die genannten elementaren Blöcke (302; 303) ein erhebliches Detailniveau aufweisen, das Bildbereichen vom Typ graphische Schnittstelle Mensch / Maschine entspricht;
- Zuordnen des ersten Kompressionstyps zu jedem elementaren Block (302; 303), der ein erhebliches Detailniveau aufweist;
- Zuordnen des zweiten Kompressionstyps zu jedem elementaren Block (301), der kein erhebliches Detailniveau aufweist;
- Anwenden des ersten Kompressionstyps (100) zu jedem elementaren Block, zu dem der genannte erste Kompressionstyp zugeordnet wurde;
**dadurch gekennzeichnet, dass**
- der erste Kompressionstyp auf jeden elementaren Block (301) angewendet wird, der direkt von zwei elementaren Blöcken eingerahmt ist, denen der erste Kompressionstyp zugeordnet wurde.

2. Kodierungsverfahren gemäß dem voranstehenden Anspruch, **dadurch gekennzeichnet, dass** der Schritt, der im Bestimmen der elementaren Blöcke besteht, die ein erhebliches Detailniveau aufweisen, die unterschiedlichen Operationen umfasst, die für jeden betrachteten elementaren Block bestehen aus:.
- Durchführen einer räumlichen Filterung (203) zum Erhalten einer Frequenzdarstellung
- Messen (205) eines Hochfrequenz-Komponentensatzes der Frequenzdarstellung;
- wenn der Hochfrequenz-Komponentensatz höher ist als ein zuvor bestimmter Schwellenwert, dann Identifizieren des elementaren Blocks, der als ein elementarer Block betrachtet wird, der ein erhebliches Detailniveau aufweist.

3. Kodierungsverfahren gemäß dem voranstehenden Anspruch, **dadurch gekennzeichnet, dass** die unterschiedlichen Operationen des Schritts, der aus dem Bestimmen der elementaren Blöcke besteht, die ein erhebliches Detailniveau aufweisen, für jede der farbigen Ebenen des betrachteten Bildes durchgeführt werden, wobei der betrachtete elementare Block als ein elementarer Block identifiziert wird, der ein erhebliches Detailniveau aufweist, wenn der Hochfrequenz-Bausatz für eine der betrachteten farbigen Ebenen höher ist als ein zuvor bestimmter spezifischer Schwellenwert, wobei jede farbige Ebene einem spezifischen Schwellenwert zugeordnet ist.

4. Verfahren gemäß dem voranstehenden Anspruch, **dadurch gekennzeichnet, dass** die spezifischen Schwellenwerte jeder farbigen Ebene denselben Wert aufweisen.

5. Verfahren gemäß wenigstens einem der voranstehenden Ansprüche, **dadurch gekennzeichnet, dass** es den zusätzlichen Schritt umfasst, bestehend aus:
- Anwenden des ersten Kompressionstyps auf jeden elementaren Block vom Typ homogener elementarer Block.

6. Verfahren gemäß wenigstens einem der voranstehenden Ansprüche, **dadurch gekennzeichnet, dass** die Kodierung vom Typ Kodierung H264 ist.

## Claims

1. Method for encoding an image, said encoding being a mixed encoding with the possibility of using a first lossless (100) compression type and a second lossy (101) compression type, wherein said method comprises the operation that consists of dividing the image into a plurality of elementary blocks (201);
said method comprising the various additional steps consisting of:
- determining which of the elementary blocks (302; 303) have a high level of detail, said elementary blocks (302; 303) having a high level of detail corresponding to image zones of the graphic Man-Machine Interface type;
- allocating the first compression type to each elementary block (302; 303) having a high level of detail;
- allocating the second compression type to each elementary block (301) not having a high level of detail;
- applying the first compression type (100) to each elementary block to which said first compression type has been allocated;
**characterised in that**
- the first compression type is applied to any elementary block (301) directly surrounded by two elementary blocks to which the first compression type has been allocated.

2. Method for encoding according to the preceding claim **characterised in that** the step consisting of determining the elementary blocks having a high level of detail comprises the various operations consisting of, for each elementary block considered:
- creating a spatial filtering (203) in order to obtain a frequency representation
- measuring (205) a rate of high-frequency components of the frequency representation;
- if the rate of high-frequency components is greater than a threshold determined beforehand, then identifying the elementary block considered as an elementary block having a high level of detail.

3. Method for encoding according to the preceding claim **characterised in that** the various operations of the step consisting in determining the elementary blocks having a high level of detail are carried out for each one of the colour plans of the image considered, the elementary block considered being identified as an elementary block having a high level of detail if, for one of the colour plans considered, the rate of high-frequency components is higher than a specific threshold determined beforehand, each colour plan being associated with a specific threshold.

4. Method according to the preceding claim **characterised in that** the specific thresholds of each colour plan have the same value.

5. Method according to at least one of the preceding claims **characterised in that** it comprises the additional step consisting of:
- applying the first compression type to any elementary block of the homogeneous elementary block type.

6. Method according to at least one of the preceding claims **characterised in that** the encoding is of the H264 encoding type.
